# EUROPÄISCHE PATENTSCHRIFT

(11) **EP 2 689 225 B1**
(45) Veröffentlichungstag und Bekanntmachung des Hinweises auf die Patenterteilung: **05.09.2018**
(21) Anmeldenummer: 12714680.1
(22) Anmeldetag: 11.04.2012
(51) Int. Cl.: G01L 3/10

(54) **MAGNETOELASTISCHER DREHMOMENTSENSOR**
MAGNETOELASTIC TORQUE SENSOR
DÉTECTEUR DE COUPLE MAGNÉTO-ÉLASTIQUE

(30) Priorität: 06.05.2011 DE 102011075391
(43) Veröffentlichungstag der Anmeldung: 29.01.2014
(73) Patentinhaber: Siemens Aktiengesellschaft, 80333 München (DE)
(72) Erfinder: BRUMMEL, Hans-Gerd, 13465 Berlin (DE); LINNERT, Uwe, 90766 Fürth (DE); MAIER, Carl Udo, 70499 Stuttgart (DE); OSTERMAIER, Jochen, 91056 Erlangen (DE); PFEIFER, Uwe, 12557 Berlin (DE)
(86) Internationale Anmeldenummer: PCT/EP2012/056560
(87) Internationale Veröffentlichungsnummer: WO 2012/152517

(56) Entgegenhaltungen:
- EP-A2- 0 136 086
- EP-A2- 0 168 692
- DE-A1-102006 017 727
- US-B1- 6 422 095

## Beschreibung

Die vorliegende Erfindung betrifft einen elektromagnetischen Drehmomentsensor mit einer Sendespule zum Generieren eines Magnetfeldes in einem Objekt, dessen Drehmoment ermittelt werden soll, mit wenigstens zwei Empfangsspulen, die ein von dem Magnetfeld der Sendespule in dem Objekt induziertes Antwortsignal empfangen.

Ein magnetoelastischer Drehmomentsensor beruht auf dem inversen magnetostriktiven Effekt, also dem Effekt, dass ferromagnetische Materialien eine Änderung in der magnetischen Suszeptibilität erfahren, wenn mechanische Spannungen auftreten. Da mechanische Spannungen außer durch Zugkräfte und Druckkräfte auch durch Torsion induziert werden, kann der inverse magnetostriktive Effekt zur Drehmomentmessung herangezogen werden, beispielsweise um das Drehmoment zu einer Welle berührungslos zu messen. Wenn ein Magnetfeld in einer ferromagnetischen Schicht bspw. einer Welle induziert wird, wird in der Schicht in Abhängigkeit von den auftretenden Spannungen ein Antwortsignal generiert, welches von den Empfangsspulen erfasst werden kann. Da das Antwortsignal von den im ferromagnetischen Material torsionsbedingt auftretenden Spannungen beeinflusst wird, welche wiederum durch das Drehmoment verursacht werden, kann aus dem Antwortsignal auf das Drehmoment der Welle geschlossen werden. Das detektierte Messsignal ist vom Abstand des Drehmomentsensors von der ferromagnetischen Schicht und von der Temperatur der ferromagnetischen Schicht abhängig. Die Genauigkeit, mit der das Drehmoment aus dem Antwortsignal bestimmt werden kann, hängt daher unter anderem davon ab, wie gut der Drehmomentsensor in Bezug auf das Objekt, dessen Drehmoment ermittelt werden soll, positioniert werden kann.

Die EP 0136086 A2 beschreibt einen Drehmomentsensor zum kontaktlosen Messen eines Drehmoments einer Welle. Der Drehmomentsensor umfasst dabei ein magnetisches Band, welches die Welle umgibt, eine Sendespule sowie eine Empfangsspule. Weiterhin einen magnetischen Kern, dessen Endflächen gegenüber des Bandes angeordnet sind. Die Empfangsspule detektiert einen magnetischen Fluss aus der Sendespule, wobei der magnetische Fluss über den magnetischen Kern, durch das Band entlang des Umfangs der Welle fließt und ein Ausgangsignal erzeugt.

Aus der DE 10 2006 017727 A1 ist eine berührungslose Sensorvorrichtung zur Bestimmung von Eigenschaften einer Welle (30) mit einer Erregerspule, die mit symmetrisch zur Erregerspule angeordneten Sensorspulen zusammenwirkt bekannt. Dabei ist eine Spulenlängsachse der Erregerspule senkrecht zu einer Wellenlängsachse angeordnet und die Sensorspulen sind in einer bevorzugten Orientierung zu der Welle angeordnet. Die Erregerspule und zwei Sensorspulen sind in den Ecken eines gleichschenkligen Dreiecks so bezüglich der Welle angeordnet, dass in der gewählten Anordnung eine Erfassung von Drehmoment und Drehzahl oder Drehmoment und axialer Position der Welle durchführbar ist.

Die EP 0168692 A2 beschreibt einen kontaktlosen Drehmomentsensor zum Messen des Drehmoments einer Welle, wobei sich die magnetische Permeabilität der Welle mit dem Drehmoment ändert. Der Drehmomentsensor umfasst eine Erregerspule, um ein magnetisches Feld zu generieren, welches durch die Welle reicht. Weiterhin umfasst sie Empfangsspulen zum Detektieren von Veränderungen in dem magnetischen Feld.

Aufgabe der vorliegenden Erfindung ist es, einen magnetoelastischen Drehmomentsensor zur Verfügung zu stellen, der eine vorteilhafte Positionierung ermöglicht.

Diese Aufgabe wird durch einen magnetoelastischen Drehmomentsensor nach Anspruch 1 gelöst. Die abhängigen Ansprüche enthalten vorteilhafte Ausgestaltungen der Erfindung.

Ein beispielhafter magnetoelastischer Drehmomentsensor umfasst eine Sendespule zum Induzieren eines Magnetfeldes in einem Objekt, dessen Drehmoment ermittelt werden soll, sowie wenigstens zwei von der Sendespule beabstandete Empfangsspulen, die ein von dem Magnetfeld der Sendespule in dem Objekt generiertes Antwortsignal empfangen. Die Sendespule weist eine Axialrichtung und eine an das Objekt heranzuführende axiale Sendespulenendfläche auf. Entsprechend weisen die Empfangsspulen jeweils eine an das Objekt heranzuführende Empfangsspulenendfläche auf, wobei zumindest die Empfangsspulenendfläche einer der Empfangsspulen über die Sendespulenendfläche vorsteht.

Die Objekte, deren Drehmomente ermittelt werden sollen, weisen häufig eine zylindersymmetrische Form auf, wie dies etwa bei Antriebswellen und sonstigen Kraft übertragenden Wellen der Fall ist. Dadurch, dass die Empfangsspulenendfläche wenigstens einer Empfangsspule über die Sendespulenendfläche vorsteht, kann die Geometrie der an das Objekt heranzuführenden Sensorendfläche gezielt an die gekrümmte Oberfläche des Objektes angepasst werden.

Erfindungsgemäß sind zwei die Sensorspule umgebende Empfangsspulenpaare vorhanden, von denen jedes zwei an einander gegenüberliegenden Seiten des Umfangs der Sendespule angeordnete Empfangsspulen aufweist. Die Empfangsspulen der Empfangsspulenpaare weisen jeweils an das Objekt heranzuführende Empfangsspulenendfläche auf und empfangen ein von dem Magnetfeld der Sendespule in dem Objekt generiertes Antwortsignal. Zumindest die Empfangsspulenendflächen der Empfangsspulen eines Empfangsspulenpaares stehen dabei über die Sendespulenendfläche vor. Dabei ist es beispielsweise möglich, dass die Empfangsspulenendflächen des anderen Empfangsspulenpaares mit der Sendespulenendfläche fluchten. Alternativ ist es aber auch möglich, dass alle Empfangsspulenendflächen über die Sendespulenendfläche vorstehen. Welche der beiden Alternativen zur Anwendung kommt, kann dabei insbesondere im Hinblick auf die Orientierung der Empfangsspulenendflächen im Bezug auf das Objekt bestimmt werden. Wenn beispielsweise die Verbindungslinie zwischen den Empfangsspulen eines Empfangsspulenpaares parallel zur Rotationsachse einer Welle verlaufen soll, können die Empfangsspulenendflächen mit der Sendespulenendfläche fluchten. Wenn das zweite Empfangsspulenpaar so angeordnet ist, dass seine Verbindungslinie die Verbindungslinie des ersten Empfangsspulenpaares senkrecht schneidet, so verläuft diese Verbindungslinie parallel zu einer Tangentialen des Wellenumfangs. Wenn nun die Empfangsspulenendflächen über die Sendespulenendfläche vorstehen, können die Empfangsspulenendflächen des zweiten Empfangsspulenpaares den gleichen Abstand von der Wellenoberfläche aufweisen, wie die Sendespulenendfläche und die damit fluchtenden Empfangsspulenendflächen des ersten Empfangsspulenpaares. Wenn dagegen die beschriebene Anordnung aus Sendespule und Empfangsspulenpaaren um 45° um die Sendespulenachse herum gedreht in Bezug auf die Welle angeordnet werden soll, ist es vorteilhaft, wenn alle Empfangsspulenendflächen fluchten und über die Sendespulenendfläche vorstehen.

Um die Induktivität der Spulen zu erhöhen und/oder das magnetische Feld zu führen, können die Sendespule und/oder die Empfangsspulen einen Kern, etwa einen Ferritkern, aufweisen. Insbesondere können die Sendespule und die Empfangsspule auch auf einem gemeinsamen Kern, etwa einem gemeinsamen Ferritkern, angeordnet sein. In diesem Fall weist der Kern einen Sendespulenkernbereich und Empfangsspulenkernbereiche auf, wobei der Sendespulenkernbereich und die Empfangsspulenkernbereiche Kernendflächen aufweisen, die mit der Sendespulenendfläche bzw. den Empfangsspulenendflächen fluchten. Mittels des gemeinsamen Kerns kann so eine festgelegte Geometrie der sensitiven Fläche des Drehmomentsensors durch geeignete Auslegung des gemeinsamen Kerns erzielt werden.

Der magnetoelastische Drehmomentsensor kann insbesondere mit fester Geometrie, d.h. individuell im Hinblick auf ein Objekt, dessen Drehmoment mit dem Sensor erfasst werden soll, konstruiert sein. Erfindungsgemäß ist der magnetoelastische Drehmomentsensor variabel ausgestaltet. Dies wird erreicht, indem zumindest die Position der Sendespulenendfläche im Bezug auf die Empfangssendespulenendflächen entlang der Axialrichtung der Sendespule verlagert werden kann. Auf diese Weise lässt sich der Betrag, um den die wenigstens eine Empfangsspulenendfläche über die Sendespulenendfläche vorsteht, variieren. Dies ermöglicht ein Anpassen des Drehmomentsensors an unterschiedliche Objekte, etwa an Wellen mit unterschiedlichen Wellendurchmessern. Im Falle eines gemeinsamen Kerns kann beispielsweise ein Verstellmechanismus zum verlagern des Sendespulenkernbereichs mit der darauf angeordneten Sendespule entlang der Axialrichtung der Sendespule vorhanden sein. Beispielsweise lässt sich ein Verstellmechanismus realisieren, wenn der Sendespulenkernbereich als gegenüber dem übrigen Kern individuelles bspw. zylindrisches Kernteil ausgebildet ist, welches an seinem der Sendespule abgewandten Ende mit einem Gewinde versehen ist. Der übrige Kern weist dann ein mit dem Gewinde des zylindrischen Kernteils zusammenwirkendes Gegengewinde auf, insbesondere etwa im Zentrum des Kerns zwischen den Empfangsspulenkernbereichen. Durch Verdrehen des Sendespulenkernteils lässt sich so eine sehr feine Justierung des Betrags, um den die Empfangsspulenendflächen über die Sendespulenendfläche vorstehen, vornehmen.

Der erfindungsgemäße Drehmomentsensor ist dazu ausgelegt, das Drehmoment eines Objektes mit geringem Abstand von diesem in einer seitlichen Position zu erfassen. Dabei können die Sendespule und die Empfangsspulen alle gleich nah an das Objekt herangeführt werden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Figur 1 zeigt eine schematische Darstellung eines Drehmomentsensors in einer Ansicht auf diejenige Seite, die dem Objekt, dessen Drehmoment ermittelt werden soll, zuzuwenden ist.
Figur 2 zeigt den Drehmomentsensor aus Figur 1 in einem Schnitt entlang der Linie II-II.
Figur 3 zeigt ein Ausführungsbeispiel der Erfindung.
Figur 4 zeigt eine weitere Abwandlung des Ausführungsbeispiels aus den Figuren 1 und 2.
Figur 5 zeigt noch eine weitere Abwandlung des Ausführungsbeispiels aus den Figuren 1 und 2.
Figur 6 zeigt einen Drehmomentsensor nach Stand der Technik.

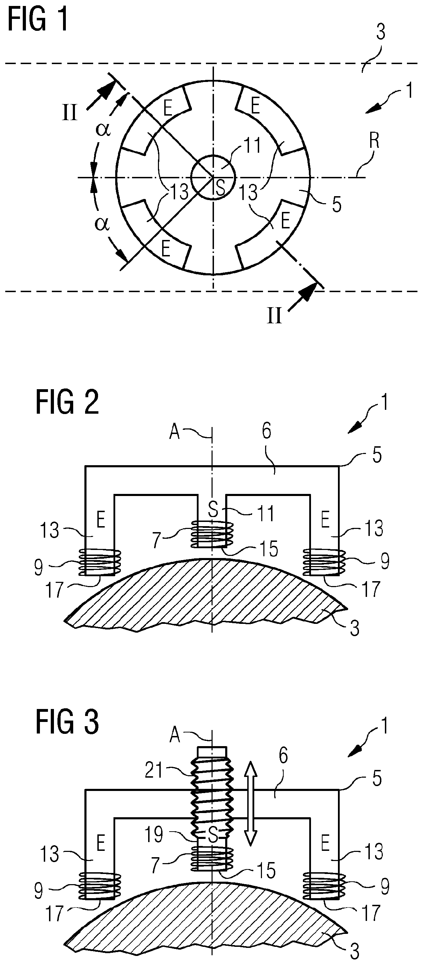

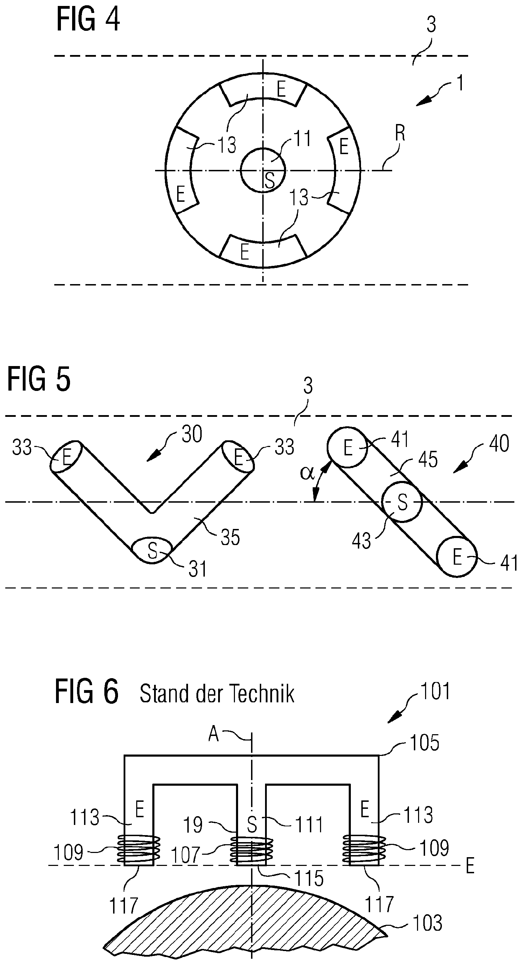

Bevor mit Bezug auf die Figuren 1 und 2 ein Drehmomentsensor beschrieben wird, erfolgt zunächst mit Bezug auf Figur 6 eine Beschreibung eines magnetoelastischen Drehmomentsensors nach Stand der Technik. Figur 6 zeigt dabei den Drehmomentsensor 101 nach Stand der Technik zusammen mit einer Welle 103, deren Drehmoment erfasst werden soll, in einer schematischen Darstellung.

Der Drehmomentsensor 101 nach Stand der Technik umfasst einen Ferritkern 105, eine Sendespule 107 sowie vier Empfangsspulen 109, von denen in Figur 6 lediglich zwei zu erkennen sind. Die Sendespule 107 und die Empfangsspulen 109 sind auf einen Sendespulenkernbereich 111 bzw. auf Empfangsspulenkernbereiche 109 des Ferritkerns 105 aufgewickelt. Die Spulen weisen jeweils eine Axialrichtung A auf, die lediglich für die Sendespule 107 eingezeichnet ist. Die Sendespule 107 und die Empfangsspulen 109 weisen eine Sendespulenendfläche 115 bzw. Empfangsspulenendflächen 117 auf, die mit den Endflächen der jeweiligen Kernabschnitte 111, 113 fluchten. Im Drehmomentsensor nach Stand der Technik liegen sowohl die Sendespulenendfläche 115 als auch alle Empfangsspulenendflächen 117 in einer gemeinsamen Ebene, die in Figur 6 durch die gestrichelte Linie E repräsentiert wird. Dadurch weisen zumindest manche Empfangsspulenendflächen 117 einen deutlich größeren Abstand von der Welle 103 auf, als die Sendespulenendfläche 115. Da das detektierte Messsignal abstandsabhängig ist und insbesondere mit größerem Abstand schwächer wird, weist die planere Geometrie des Drehmomentsensors nach Stand der Technik den Nachteil auf, dass ein schwächeres Signal detektiert wird, als dies bei optimierter Geometrie möglich wäre. Dies trifft umso mehr zu, je geringer der Durchmesser der Welle 103 im Vergleich zum Abstand der Sendespule von den Empfangsspulen ist.

Ein Drehmomentsensor, bei dem die gerade beschriebene Problematik nicht auftritt, wird nachfolgend mit Bezug auf die Figuren 1 und 2 beschrieben, welche jeweils den Drehmomentsensor 1 zusammen mit einer Welle 3, deren Drehmoment gemessen werden soll, zeigen. Während Figur 1 den Drehmomentsensor 1 von der Position der Welle 3 aus gesehen zeigt, zeigt Figur 2 den Drehmomentsensor 1 in einem Schnitt entlang der Linie II-II aus Figur 1.

Der Drehmomentsensor 1 umfasst wie der Drehmomentsensor nach Stand der Technik einen Ferritkern 5 mit einem zentralen Sendespulenkernabschnitt 11 und vier den Sendespulenkernabschnitt 11 umgebenden Empfangsspulenkernabschnitten 13, die im vorliegenden Ausführungsbeispiel die Form von Kreisringsegmenten aufweisen, aber auch anders, etwa zylinderförmig ausgebildet sein können. Der Sendespulenabschnitt 11 weist zylinderförmige Geometrie auf. Auf den Sendespulenkernabschnitt 11 ist eine Sendespule 7 gewickelt, auf die Empfangsspulenkernabschnitte 13 sind jeweils Empfangsspulen 9 aufgewickelt. Alle Kernabschnitte stehen über einen planaren, kreisförmigen Trägerabschnitt 6 vor.

Im Drehmomentsensor 1 ist der Sendespulenkernabschnitt 11 in Axialrichtung A der Sendespule 7 kürzer als die Empfangsspulenkernabschnitte 13. Dadurch stehen die Empfangsspulenendflächen 17 alle über die Sendespulenendfläche 15 vor. Der Betrag, um den der Sendespulenkernabschnitt 11 kürzer als die Empfangsspulenkernabschnitte 13 ist, bestimmt sich dabei nach dem Radius der Welle 3, deren Drehmoment gemessen werden soll. Auf diese Weise lässt sich erreichen, dass die Empfangsspulenendflächen 17 deutlich näher an die Welle 3 herangeführt werden können, als dies beim Drehmomentsensor 101 nach Stand der Technik der Fall ist. Mit anderen Worten, durch die axiale Verlagerung der Sendespule 7 in Bezug auf die Empfangsspulen 9 bei jeweils gleicher Axialrichtung der Spulen ist es möglich, den Drehmomentsensor 1 der Geometrie des Messobjektes, im vorliegenden Ausführungsbeispiel als der Welle 3, derart anzupassen, dass Sendespule 7 und Empfangsspulen 9 bei jeweils gleicher axialen Ausrichtung der Spulen für die Messung optimal am Objekt positioniert sind. Dabei nehmen alle Spulen im Wesentlichen den gleichen Abstand zum Objekt ein.

Durch eine vorgefertigte Form des Ferritkerns ist die in Figur 2 dargestellte Geometrie des Drehmomentsensors 1 starr an die Geometrie des Objektes 3, dessen Drehmoment gemessen werden soll, angepasst. Wenn eine höhere Flexibilität des Drehmomentsensors 1 in Bezug auf die Verwendung für verschiedene Objekte, deren Drehmomente bestimmt werden sollen, gewünscht ist, ist es auch möglich, den Drehmomentsensor derart auszugestalten, dass sich zumindest die Sendespule in ihrer Position entlang der Axialrichtung A verlagern lässt.

Eine Abwandlung des in den Figuren 1 und 2 dargestellten Drehmomentsensors, die ein erfindungsgemäßes Verlagern der Sendespule entlang der Axialrichtung A ermöglicht, ist in Figur 3 dargestellt. Die Figur zeigt den erfindungsgemäßen Drehmomentsensor 1 in einem Schnitt entlang der Linie II-II in Figur 1. Nachfolgend werden lediglich die Unterschiede zu dem in den Figuren 1 und 2 dargestellten Drehmomentsensor beschrieben. Elemente, die sich nicht oder nur unwesentlich von denen des in den Figuren 1 und 2 dargestellten Drehmomentsensors 1 unterscheiden, sind in Figur 3 mit denselben Bezugszeichen wie in den Figuren 1 und 2 bezeichnet und werden nicht noch einmal erläutert.

Der erfindungsgemäße Drehmomentsensor 1 aus Figur 3 unterscheidet sich von dem Drehmomentsensor aus den Figuren 1 und 2 in erster Linie durch die Ausgestaltung des Ferritkerns 5. Dieser weist gemäß der Abwandlung ein individuelles zylindrisches Sendespulenkernteil 19 an Stelle des Sendespulenkernbereiches 11 auf. An seinem der Sendespule 7 abgewandten Ende ist das Sendespulenkernteil 19 mit einem Außengewinde 21 ausgestattet. Der Trägerabschnitt 6 des Ferritkerns 5 weist dort, wo in dem in den Figuren 1 und 2 dargestellten Ausführungsbeispiel der Sendespulenkernbereich 11 angeordnet ist, eine Öffnung mit einem Innengewinde auf, in die das Sendespulenkernteil 19 eingeschraubt ist. Durch Verdrehen des Sendespulenkernteils 19 lässt eine Verlagerung der Sendespule 7 entlang der Axialrichtung A herbeiführen. Die Verwendung eines Gewindes ermöglicht ein besonders präzises Positionieren der Sendespule 7 entlang der Axialrichtung A. Außer einem Gewinde sind jedoch auch andere Einrichtungen denkbar, mit denen sich das Sendespulenkernteil 19 in Axialrichtung A verlagern lässt, beispielsweise ein Schlitten, der in mehreren Axialpositionen einrasten kann. Auch ein Sendespulenkernteil in Form lediglich eines Stiftes, also ohne Gewinde, ist möglich, wobei das Kernteil dann in einer gewindefreien Öffnung des Kerns 5 verschiebbar angeordnet ist. Eine Arretierung in einer gewünschten Position kann beispielsweise mittels einer oder mehrerer Arretierschrauben erfolgen.

Obwohl in Figur 3 lediglich die Sendespule 7 entlang der Axialrichtung A verlagert werden kann, besteht auch die Möglichkeit, eine oder mehrere der Empfangsspulen 9 in Axialrichtung verlagerbar auszugestalten. Dies kann beispielsweise vorteilhaft sein, wenn der Drehmomentsensor nicht nur in der in Figur 1 gezeigten Orientierung in Bezug auf das Messobjekt 3 verwendet werden soll.

Wie Figur 1 zu entnehmen ist, sind die Empfangsspulen 13 in Paaren angeordnet, wobei jedes Empfangsspulenpaar aus zwei einander in Bezug auf die Sendespule 11 gegenüberliegenden Empfangsspulen 13 besteht. In Figur 1 schneiden sich die Verbindungslinien der beiden Empfangsspulenpaare im rechten Winkel und sind in einem Winkel α von 45° gegenüber der Richtung der Rotationsachse R der Welle 3 verdreht. Dies hat zur Folge, dass jede Empfangsspule 13 denselben Abstand von der Welle 3 besitzt, wenn die Empfangsspulenendflächen 17 alle in derselben Ebene liegen.

Wird der Drehmomentsensor 1 jedoch in einer gegenüber der Orientierung aus Figur 1 um 45° verdrehten Orientierung in Bezug auf die Rotationsachse R der Welle 3 angeordnet, wie dies in Fig. 4 dargestellt ist, sollten die Sendespulenendflächen 17 desjenigen Sendespulenpaares, dessen Verbindungslinie parallel zur Rotationsachse R der Welle 3 verläuft, in derselben Ebene wie die Sendespulenendfläche 15 liegen. Die Empfangsspulenendflächen 17 desjenigen Empfangsspulenpaares, dessen Verbindungslinie senkrecht zur Rotationsachse R verläuft, sollten dagegen über die Sendespulenendfläche 15 und damit auch über die Empfangsspulenendflächen 17 des anderen Empfangsspulenpaares vorstehen, um zu erreichen, dass alle Spulenendflächen denselben Abstand von der Welle 3 aufweisen.

Obwohl die bisher beschriebenen magnetoelastischen Drehmomentsensoren jeweils zwei Empfangsspulenpaare aufweisen, bei denen die Verbindungslinie zwischen den Empfangsspulen des einen Paares die Verbindungslinie zwischen den Empfangsspulen des anderen Paares im rechten Winkel schneidet, besteht auch die Möglichkeit, dass sich diese Verbindungslinie in einem anderen als einem rechten Winkel schneiden. Außerdem sind auch magnetoelastische Drehmomentsensoren mit weniger oder mehr als vier Empfangsspulen denkbar. Beispiele für derartige Abwandlungen sind in Figur 5 dargestellt. Die Figur zeigt zwei mögliche, nicht erfindungsgemäße Abwandlungen, die jeweils nur zwei Empfangsspulen aufweisen.

In der in der Figur 5 links dargestellten Abwandlung sind die Empfangsspulen 33 zusammen mit der Sendespule 31 auf einem von der Welle 3 aus gesehen V-förmig konfigurierten Ferritkern 35 angeordnet. In Analogie zu den Figuren 1 und 4 können hierbei entweder die beiden Empfangsspulenendflächen in einer gemeinsamen Ebene liegen, die über die Sendespulenendflächenebene vorsteht (wenn die Orientierung aus Figur 5 vorliegt), oder es können die Sendespulenendfläche und eine der Empfangsspulenendflächen in einer gemeinsamen Ebene liegen, wobei dann die Empfangsspulenendfläche der anderen Empfangsspule über diese Ebene vorsteht. Diese Konfiguration ist insbesondere dann sinnvoll, wenn der Drehmomentsensor 30 in einer gegenüber der in Figur 5 gezeigten Orientierung um 45° um die Sendespulenachse gedreht ist.

Eine weitere mögliche nicht erfindungsgemäße Abwandlung des magnetoelastischen Drehmomentsensors ist rechts in Figur 5 gezeigt. Dieser Drehmomentsensor weist eine lineare Konfiguration auf, wobei die Empfangsspulen 41 an den Enden eines linearen Trägerabschnitts des Kerns 45 angeordnet sind, in dessen Mitte sich die Sendespule 43 befindet. In der in Figur 5 gezeigten Orientierung stehen die Empfangsspulenendflächen über die Sendespulenendfläche vor. Der Betrag des Vorstandes hängt dabei davon ab, welchen Winkel α die Verbindungslinie zwischen den Empfangsspulenendflächen mit der Rotationsachse der Welle 3 einschließt.

Der mit Bezug auf die Figuren 1 bis 5 beispielhaft beschriebene magnetoelastische Drehmomentsensor ermöglicht eine erhöhte Genauigkeit der Drehmomentmessung durch eine optimale Abstandsanpassung aller Spulen in Bezug auf das Messobjekt, insbesondere bei gleicher axialen Ausrichtung der Spulen, und kann damit insbesondere für kleine Wellendurchmesser oder die Konstruktion großer Sensorkopfgeometrien verwendet werden. Bei der Verwendung von großen Sensorköpfen in Bezug auf den Durchmesser des Messobjektes ist eine Positionierung der Spulen auf einer konkaven Oberfläche vom Vorteil, um alle Spulen möglichst nahe an die Oberfläche des Messobjektes heranführen zu können. Damit werden bessere Empfindlichkeiten des Messsignals erreicht.

## Patentansprüche

1. Magnetoelastischer Drehmomentsensor (1) mit
- einer Sendespule (7) zum Generieren eines Magnetfeldes in einem Objekt (3), dessen Drehmoment ermittelt werden soll, wobei die Sendespule (7) eine Axialrichtung (A) und eine an das Objekt (3) heranzuführenden axiale Sendespulenendfläche (15) aufweist, wobei
- zwei die Sendespule (7) umgebende Empfangsspulenpaare vorhanden sind, von denen jedes zwei an einander gegenüber liegenden Seiten des Umfangs der Sendespule (17) angeordnete Empfangsspulen (9) aufweist, die jeweils eine an das Objekt (3) heranzuführende Empfangsspulenendfläche (17) aufweisen und ein von dem Magnetfeld der Sendespule (7) in dem Objekt (3) induziertes Antwortsignal empfangen, wobei zumindest die Empfangsspulenendflächen (17) der Empfangsspulen (9) eines Empfangsspulenpaares über die Sendespulenendfläche (15) vorstehen, **dadurch gekennzeichnet, dass** zumindest die Position der Sendespulenendfläche (15) in Bezug auf die Empfangsspulenendflächen (17) entlang der Axialrichtung (A) der Sendespule (7) verlagert werden kann.

2. Drehmomentsensor (1) nach Anspruch 1, in dem alle Empfangsspulenendflächen (17) über die Sendespulenendfläche (15) vorstehen.

3. Drehmomentsensor (1) nach einem der Ansprüche 1 oder 2, in dem die Empfangsspulenpaare im rechten Winkel zueinander angeordnet sind.

4. Drehmomentsensor (1) nach einem der vorangehenden Ansprüche, in dem die Sendespule (7) und/oder die Empfangsspulen (9) einen Kern (5) aufweisen.

5. Drehmomentsensor (1) nach Anspruch 4, in dem die Sendespule (7) und die Empfangsspulen (9) auf einem gemeinsamen Kern (5) angeordnet sind, welcher einen Sendespulenkernbereich (11) und Empfangsspulenkernbereiche (13) aufweist, wobei der Sendespulenkernbereich und die Empfangsspulenkernbereiche (13) Kernendflächen aufweisen, die mit der Sendespulenendfläche (15) bzw. den Empfangsspulenendflächen (17) fluchten.

6. Drehmomentsensor (1) nach Anspruch 5, in dem eine Verstellmechanismus (21) zum verlagern des Sendespulenkernbereiches (11) mit der darauf angeordneten Sendespule (7) entlang der Axialrichtung (A) der Sendespule (7) vorhanden ist.

7. Drehmomentsensor (1) nach Anspruch 6, in dem
- der Sendespulenkernbereich (11) als gegenüber dem übrigen Kern (5) individuelles Kernteil (19) ausgebildet ist, welches an seinem der Sendespule (7) abgewandten Ende mit einem Gewinde (21)versehen ist, und
- der übrige Kern (5) ein mit dem Gewinde (21) des Kernteils (19) zusammenwirkendes Gegengewinde aufweist.

## Claims

1. Magnetoelastic torque sensor (1) comprising
- an emission coil (7) for generating a magnetic field in an object (3) whose torque is to be determined, wherein the emission coil (7) has an axial direction (A) and an axial emission coil end face (15) which is to be moved up to the object (3), wherein
two reception coil pairs which surround the emission coil (7) are present, each of which has two reception coils (9) which are arranged on sides of the circumference of the emission coil (17) lying opposite one another and which each have a reception coil end face (17) which is to be moved up to the object (3), and receive a response signal which is induced in the object (3) by the magnetic field of the emission coil (7), wherein at least the reception coil end faces (17) of the reception coils (9) of a reception coil pair protrude beyond the emission coil end face (15), **characterized in that** at least the position of the emission coil end face (15) with respect to the reception coil end faces (17) can be moved in the axial direction (A) of the emission coil (7).

2. Torque sensor (1) according to Claim 1, in which all the reception coil end faces (17) protrude beyond the emission coil end face (15).

3. Torque sensor (1) according to one of Claims 1 and 2, in which the reception coil pairs are arranged at a right angle to one another.

4. Torque sensor (1) according to one of the preceding claims, in which the emission coil (7) and/or the reception coils (9) have a core (5).

5. Torque sensor (1) according to Claim 4, in which the emission coil (7) and the reception coils (9) are arranged on a common core (5) which has an emission coil core region (11) and reception coil core regions (13), wherein the emission coil core region and the reception coil core regions (13) have core end faces which are flush with the emission coil end face (15) and the reception coil end faces (17), respectively.

6. Torque sensor (1) according to Claim 5, in which an adjustment mechanism (21) for moving the emission coil core region (11) with the emission coil (7) arranged thereon in the axial direction (A) of the emission coil (7) is present.

7. Torque sensor (1) according to Claim 6, in which
- the emission coil core region (11) is embodied as a core part (19) which is specific to the rest of the core (5) and which is provided with a thread (21) at its end facing away from the emission coil (7), and
- the rest of the core (5) has an opposing thread which interacts with the thread (21) of the core part (19).

## Revendications

1. Détecteur (1) de couple magnéto-élastique, comprenant
- une bobine (7) d'émission pour produire un champ magnétique dans un objet (3), dont on doit déterminer le couple, dans lequel la bobine (7) d'émission a une direction (A) axiale et une surface (15) d'extrémité axiale à approcher de l'objet (3), dans lequel
- il y deux paires de bobines de réception entourant la bobine (7) d'émission, dont chacune a deux bobines (9) de réception, qui sont disposées sur des côtés opposés l'un à l'autre du pourtour de la bobine (17) d'émission, qui ont chacune une surface (17) d'extrémité à approcher de l'objet (3) et qui reçoivent un signal de réponse induit dans l'objet (3) par le champ magnétique de la bobine (7) d'émission, dans lequel au moins les surfaces (17) d'extrémité des bobines (9) de réception d'une paire de bobines de réception dépassent de la surface (15) d'extrémité de la bobine d'émission, **caractérisé en ce qu'**au moins la position de la surface (15) d'extrémité de la bobine d'émission peut être décalée par rapport aux surfaces (17) d'extrémité des bobines de réception suivant la direction (A) axiale de la bobine (7) d'émission.

2. Détecteur (1) de couple suivant la revendication 1, dans lequel toutes les surfaces (17) d'extrémité des bobines de réception dépassent de la surface (15) d'extrémité de la bobine d'émission.

3. Détecteur (1) de couple suivant l'une des revendications 1 ou 2, dans lequel les paires de bobines de réception sont disposées à angle droit l'une par rapport à l'autre.

4. Détecteur (1) de couple suivant l'une des revendications précédentes, dans lequel la bobine (7) d'émission et/ou les bobines (9) de réception ont un noyau (5).

5. Détecteur (1) de couple suivant la revendication 4, dans lequel la bobine (7) d'émission et les bobines (9) de réception sont disposées sur un noyau (5) commun, qui a une partie (11) de noyau de bobine d'émission et des parties (13) de noyau de bobine de réception, la partie de noyau de bobine d'émission et les parties (13) de noyau de bobine de réception ayant des surfaces d'extrémité de noyau, qui sont alignées sur la surface (15) de la bobine d'émission ou sur les surfaces (17) des bobines de réception.

6. Détecteur (1) de couple suivant la revendication 5, dans lequel il y a un mécanisme (21) de réglage pour déplacer la partie (11) de noyau de la bobine d'émission, avec la bobine (7) d'émission qui s'y trouve, suivant la direction (A) axiale de la bobine (7) d'émission.

7. Détecteur (1) de couple suivant la revendication 6, dans lequel
- la partie (11) de noyau de la bobine d'émission est constituée sous la forme d'une partie (19) de noyau individuelle par rapport au reste du noyau (5), partie (19) qui est pourvue d'un filetage (21) à son extrémité éloignée de la bobine (7) d'émission et
- le reste du noyau (5) a un contrefiletage coopérant avec le filetage (21) de la partie (19) de noyau.
